# EUROPEAN PATENT SPECIFICATION

(11) **EP 2 147 050 B1**
(45) Date of publication and mention of the grant of the patent: **08.08.2012**
(21) Application number: 08746894.8
(22) Date of filing: 25.04.2008
(51) Int. Cl.: C08L 51/04, C08L 23/06, C08L 53/00, C08F 279/02

(54) **CONTROLLED GLOSS BLENDS OF MONOVINYLIDENE AROMATIC AND ETHYLENE POLYMERS**
MISCHUNGEN AUS MONOVINYLIDEN-AROMATISCHEN POLYMEREN UND ETHYLENPOLYMEREN MIT KONTROLLIERTEM GLANZ
MÉLANGES À BRILLANCE CONTRÔLÉE CONSTITUÉS DE POLYMÈRES D'ÉTHYLÈNE ET DE MONOVINYLIDÈNE AROMATIQUE

(30) Priority: 04.05.2007 US 927709 P
(43) Date of publication of application: 27.01.2010
(73) Proprietor: Styron Europe GmbH, 8810 Horgen (CH)
(72) Inventor: SALMANG, Rodolfo, NL-4532JB Terneuzen (NL); TORRES, Enrique, CH-8800 Thalwil (CH); CORIJN, Richard, B., NL-4336 HJ Middelburg (NL); POCHON, Aude, E-43840 Salou (ES)
(74) Representative: HOFFMANN EITLE
(86) International application number: PCT/US2008/061562
(87) International publication number: WO 2008/137350

(56) References cited:
- EP-A- 0 004 685
- EP-A- 0 060 525
- US-A- 6 027 800
- US-B1- 6 380 305

## Description

This application claims benefit of U.S. Provisional Application Serial No. 60/927,709, filed on May 4, 2007.

This invention relates to improved blends of a major amount of monovinylidene aromatic polymer with a minor amount of an ethylene polymer, which blends are specially adapted and suited for providing articles with improved properties and a controlled gloss surface and, in another embodiment, for use in stretch blow molding processes. This invention, in another embodiment, also relates to improved injection stretch blow molding processes and improved injection stretch blow molded articles. In one aspect, the invention relates to molded articles having a combination of improved opacity, controlled gloss surface appearance, haptics and physical properties in monovinylidene aromatic/ethylene polymer blends and articles prepared therefrom. In another aspect, the invention relates to improved processes for producing stretch blow molded articles, including thermoformed articles, at relatively high production rates and reduced expense from such blends and obtaining articles with improved combinations of opacity, controlled gloss surface aesthetics and physical properties.

Stretch blow molding (SBM) machinery, including injection stretch blow molding (ISBM) machinery currently in commercial use, is designed to rapidly mold packaging containers for carbonated drinks and other products. Examples of known injection stretch blow molding processes are shown in WO 1996/8356A with PET; in EP 870,593 recommending the use of PET and PC resins; in JP 07-237,261A recommending PE; and in WO 2005/074428A teaching the replacement of PET with PP. Compression molded preforms can also be employed in stretch blow molding processes as shown in WO 2006/040,631A; WO 2006/040,627A; WO 2005/077,642; and EP 1,265,736. Monovinylidene aromatic polymers such as polystyrene (PS) and rubber-modified, high impact polystyrene (HIPS) have been used in the somewhat similar injection blow molding process in relatively small volumes in specific small container applications (100 milliliters or less) but not successfully with larger containers (greater than 100 ml) and not with ISBM.

The producers and users of containers are continually looking for alternative, lower cost resins and improved processes that can be employed in their commercial machinery at high production rates to produce acceptable containers in terms of the physical and aesthetic requirements for such containers. The key resin properties for successfully meeting the needs of these container producers are combinations of processability and physical properties that permit the existing production equipment to run at relatively fast cycle times, without process stoppages and provide molded articles with good performance and aesthetic properties at high resin utilization efficiencies.

Monovinylidene aromatic resins and especially rubber-modified polystyrenes (which are hereinafter referred to as high impact polystyrene or "HIPS") are good candidates for packaging applications due to good property combinations including high flexural modulus, low density (light weighting possibilities) and/or good acceptance in the thermoformed dairy container market where white colored containers are the standard. However, in attempting to use PS or HIPS resins to produce opaque, white and other colored containers in stretch blow molding processes, the current TiO2 pigmented resins are not as well suited for and/or do not run well as would be desired in stretch blow molding machines where there needs to be a combination of melt strength and processability. The various deficiencies with available PS or HIPS resins in these applications therefore include the high cost of TiO2 raw material; inefficient radiation heating of highly filled preform; poor white color if TiO2 levels are reduced to improve radiation heating step; surface friction between the PS or HIPS articles and metal rails causing jamming; and the need for processing conditions outside normal equipment ranges.

It has long been known to blend monovinylidene aromatic polymers with ethylene polymer resins using a compatibilizer component to provide improved compatibility or miscibility between the two, normally incompatible types of polymers. It has been a goal to obtain a cost effective product with a combination of physical properties that can be balanced to suit various applications. For example, blends of these types are shown in EP 195,829; USP 6,723,793; US 2004/115,458A; US 2006/63,887A; and WO 2001/40,374A. However, these blends are typically complex and expensive due to the presence of a compatibilizer.

In USP 6,027,800 high gloss blends of rubber modified monovinylidene aromatic polymers with certain high density polyethylene resins are prepared with and without a compatibilizing component selected from a range of styrene/diene block copolymers.

Also, in CHEMagazin (1997), 7(5), 16-17, the authors disclosed polymer blends of high-impact polystyrene with 28% HDPE and an undisclosed compatibilizer, with good processability, very good stress cracking resistance in cyclopentane vapors and vegetable oil, and good adhesion with a hard polyurethane foam prepared using cyclopentane.

In one embodiment the resent invention is a non-compatibilized blend consisting essentially of (A) from 90 to 94 weight percent based on weight of (A) and (B) of a rubber modified monovinylidene aromatic polymer, (B) from 6 to 10 weight percent based on weight of (A) and (B) of an ethylene polymer having a density in the range of from about 0.87 to about 0.98 grams per cubic centimeter (g/cc) as measured by ASTM D 792-03 and (C) optional, non-polymeric additives and stabilizers. In one aspect the ethylene polymer is selected from the group consisting of high density polyethylene, linear low density polyethylene, low density polyethylene, and olefin block copolymers and is most preferably HDPE. In another aspect, the ethylene polymer has a density of least about 0.920 grams per cubic centimeter (g/cc), preferably at least about 0.940 grams per cubic centimeter (g/cc). In a further aspect the ethylene polymer comprises at least 70 percent by weight ethylene.

Preferably the ethylene polymer component is a HDPE resin. Alternatively the ethylene polymer component is an olefin block copolymer of ethylene and octene having a density of from 0.87 to 0.94 grams per cubic centimeter (g/cc).

In one embodiment the monovinylidene aromatic polymer has been polymerized in the presence of at least one rubber, which rubber can preferably be selected from the group consisting of 1,3-butadiene homopolymer rubbers, copolymers rubbers of 1,3-butadiene with one or more copolymerizable monomer and mixtures of two or more of these. In another embodiment the blend is in the form of a molded article having a surface gloss of less than 70%. In an alternative embodiment the blend is in the form of a stretch blow molded article. Another embodiment is a stretch blow molded article prepared from the mixture of Claim 1.

A further embodiment of the present invention is a process for preparing a blend as described above comprising melt mixing the ethylene polymer and monovinylidene aromatic polymer at shear rate of at least about 200 reciprocal seconds (s⁻¹), alternatively comprising melt mixing the ethylene polymer and monovinylidene aromatic polymer under total shear strain of at least about 400. Alternatively the inventive process comprises the step of blending the ethylene polymer and monovinylidene aromatic polymer in the melt extrusion section of a molding machine. A further alternative process embodiment includes where the ethylene polymer component is added to the monovinylidene aromatic polymer by prior dry blending.

In comparing the blends, processes and molded articles according to the present invention to those of the prior art, it was found that they provided the opportunity for property combination improvements, particularly in the areas of toughness, reduced material weight controlled gloss surface appearance and/or white or other coloring As used herein, the term controlled gloss in reference to the surface of molded articles prepared from the blends of the present invention refers to a relatively low gloss level according to ASTM 523 at 60° on injection molded samples. This results in haptics or "touch" properties often referred to as a "soft touch" surface and/or in a so-called matte finish in molded articles (such as gloss measurement samples) and including preforms that are used in stretch blow molding process, in finished stretch blow molded articles and in extruded sheet.

According to the present invention as compared to resins and containers of the prior art, within a given set of parameters, there were improvements in one or more desirable properties while at least maintaining one or more of the other properties. The present invention provides the makers of many types of containers with options for improved packaging efficiency meaning that less weight of resin is required to make a given size of container, providing obvious advantages in terms of raw material costs and reduced container shipping weight.

The well known Component A monovinylidene aromatic polymers (including both homo- and copolymers) are commercially available and are produced by polymerizing monovinylidene aromatic monomers. The monovinylidene aromatic monomers suitable for producing the polymers and copolymers used in the practice of this invention are preferably of the following formula: 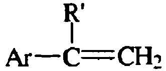 in which R' is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl (in which the alkyl group of the phenyl ring contains 1 to 10, preferably 1 to 8 and more preferably 1 to 4, carbon atoms), with phenyl being most preferred. Typical monovinylidene aromatic monomers which can be used include: styrene, alpha-methylstyrene, all isomers of vinyl toluene, especially para- vinyltoluene, all isomers of ethyl styrene, propyl styrene, vinyl biphenyl, vinyl naphthalene, vinyl anthracene and mixtures thereof with styrene being the most preferred.

The monovinylidene aromatic monomer can be copolymerized with one or more of a range of other copolymerizable monomers. Preferred comonomers include nitrile monomers such as acrylonitrile, methacrylonitrile and fumaronitrile; (meth)acrylate monomers such as methyl methacrylate or n-butyl acrylate; maleic anhydride and/or N-aryl-maleimides such as N-phenylmaleimide, and conjugated and nonconjugated dienes. Representative copolymers include styrene-acrylonitrile (SAN) copolymers. The copolymers typically contain at least about 1, preferably at least about 2 and more preferably at least about 5, wt % of units derived from the comonomer based on weight of the copolymer. Typically, the maximum amount of units derived from the comonomer is about 40, preferably about 35 and more preferably about 30, wt % based on the weight of the copolymer.

The weight average molecular weight (Mw) of the monovinylidene aromatic polymers used in the practice of this invention can vary widely. For reasons of mechanical strength, among others, typically the Mw is at least about 100,000, preferably at least about 120,000, more preferably at least about 130,000 and most preferably at least about 140,000 g/mol. For reasons of processability, among others, typically the Mw is less than or equal to about 400,000, preferably less than or equal to about 350,000, more preferably less than or equal to about 300,000 and most preferably less than or equal to about 250,000 g/mol.

Similar to the Mw, the number average molecular weight (Mn) of the monovinylidene aromatic polymers used in the practice of this invention can also vary widely. Again for reasons of mechanical strength, among others, typically the Mn is at least about 30,000, preferably at least about 40,000, more preferably at least about 50,000 and most preferably at least about 60,000 g/mol. Also for reasons of processability, among others, typically the Mn is less than or equal to about 130,000, preferably less than or equal to about 120,000, more preferably less than or equal to about 110,000 and most preferably less than or equal to about 100,000 g/mol.

Along with the Mw and Mn values, the ratio of Mw/Mn, also known as polydispersity or molecular weight distribution, can vary widely. Typically, this ratio is at least about 2, and preferably greater than or equal to about 2.3. The ratio typically is less than or equal to about 4, and preferably less than or equal to about 3. The Mw and Mn are typically determined by gel permeation chromatography using a polystyrene standard for calibration.

The monovinylidene aromatic polymers and copolymers used in the practice of this invention need to contain or be blended or graft polymerized with one or more rubbers to form a high impact monovinylidene aromatic polymer or copolymer, e.g., GPPS or SAN blended with a rubber or styrene or styrene and acrylonitrile graft polymerized with rubber to produce rubber modified resins such as HIPS or ABS. The rubber is typically an unsaturated rubbery polymer having a glass transition temperature (Tg) of not higher than about 0C, preferably not higher than about -20C, as determined by ASTM D-756-52T. Tg is the temperature or temperature range at which a polymeric material shows an abrupt change in its physical properties, including, for example, mechanical strength. Tg can be determined by differential scanning calorimetry (DSC).

The rubbers suitable for use in the present invention are those that have a solution viscosity in the range of about 5 to about 300 centipoise (cps, 5 percent by weight styrene at 20C) and Mooney viscosity of about 5 to about 100 (ML+1, 100C). Suitable rubbers include diene rubbers, diene block rubbers, butyl rubbers, ethylene propylene rubbers, ethylene-propylene-diene monomer (EPDM) rubbers, ethylene copolymer rubbers, acrylate rubbers, polyisoprene rubbers, halogen-containing rubbers, silicone rubbers and mixtures of two or more of these rubbers. Also suitable are interpolymers of rubber-forming monomers with other copolymerizable monomers. Suitable diene rubbers include polymers of conjugated 1,3-dienes, for example, butadiene, isoprene, piperylene, chloroprene, or mixtures of two or more of these dienes. Suitable rubbers also include homopolymers of conjugated 1,3-dienes and interpolymers or copolymers of conjugated 1,3-dienes with one or more copolymerizable monoethylenically unsaturated monomers, for example, such homopolymers or copolymers of butadiene or isoprene, with 1,3-butadiene homo- or copolymers being especially preferred. Such rubbers also include mixtures of any of these 1,3-diene rubbers.. Other rubbers include homopolymers of 1,3-butadiene and include copolymers of 1,3-butadiene with one or more copolymerizable monomers, such as monovinylidene aromatic monomers as described above, styrene being preferred. Preferred copolymers of 1,3-butadiene are random, block or tapered block rubbers of at least about 30, more preferably at least about 50, even more preferably at least about 70, and still more preferably at least about 90, wt % 1,3-butadiene, and preferably up to about 70, more preferably up to about 50, even more preferably up to about 30, and still more preferably up to about 10, wt % monovinylidene aromatic monomer, all weights based on the weight of the 1,3-butadiene copolymer.

As known to those skilled in the art, the 1, 3-diene rubbers can further have molecular weight distributions that are optimized for providing desired rubber particle morphologies. Among other things, known coupling agents can be utilized to provide higher molecular weight rubbers or a high molecular weight component for a bimodal molecular distribution.

The rubber content of the final rubber modified monovinylidene aromatic polymer composition as used herein is measured by counting only diene content from the copolymer rubber component and not including any copolymerized monovinylidene or other non-diene monomer that is part of the copolymer rubber. In general, the rubber in the rubber-modified polymers of this invention is typically present in an amount of at least about 1, preferably at least about 2 wt % based on the weight of the rubber-modified polymer. In the case of HIPS resins, the rubber modified monovinylidene aromatic polymer compositions according to the present invention will typically have a rubber content of at least about 1.5 weight %, preferably at least 2 weight %, more preferably at least 2.5 weight % and most preferably at least 3 weight % percent by weight, based on the total weight of the rubber modified monovinylidene aromatic polymer composition. In the case of corresponding ABS resins, the rubber in the rubber-modified polymers of this invention is typically present in an amount at least about 5, preferably at least about 8, and most preferably at least about 10 wt % based on the weight of the rubber-modified polymer.

The rubber in the rubber-modified polymers of this invention is typically present in an amount less than or equal to about 40, preferably less than or equal to about 30 wt % based on the weight of the rubber-modified polymer. Particularly in the case of HIPS resins, the rubber in the rubber-modified polymers of this invention is typically present in an amount less than or equal to about 15, preferably less than or equal to about 12, more preferably less than or equal to about 10, and most preferably less than or equal to about 9 wt % based on the weight of the rubber-modified polymer. Particularly in the case of ABS resins, the rubber in the rubber-modified polymers of this invention is typically present in an amount less than or equal to about 30 preferably less than or equal to about 28 more preferably less than or equal to about 25, and most preferably less than or equal to about 20 wt % based on the weight of the rubber-modified polymer.

The rubber modified monovinylidene aromatic resins according to the present invention can utilize a broad range of morphologies, average particle sizes and particle size distributions for the group of rubber particles, all of which are known to those skilled in the art. The rubber particles dispersed within the rubber modified monovinylidene aromatic polymer matrix can have one or more of the known rubber particle morphologies including single occlusion morphology referred to as core/shell or capsule particle morphology or more complex rubber particle morphologies that are known in the art and have structures that can be described as cellular, entangled, multiple occlusions, labyrinth, coil, onion skin or concentric circle.

The rubber particles in the compositions according to the present invention will typically have a volume average diameter of at least 0. 1 micron, preferably at least 0.5 micron and more preferably at least 1 micron and typically less than or equal to 10 microns, preferably less than or equal to 8 microns and more preferably less than or equal to 7 microns, and most preferably less than or equal to 6 microns. As used herein, the volume average rubber particle size or diameter refers to the diameter of the rubber particles, including all occlusions of monovinylidene aromatic polymer within the rubber particles. These particle sizes are best measured using light scattering based equipment like Coulter LS230 for the large average rubber particle sizes (>0.2 micron) or transmission electron microscopy image analysis in the case of smaller average rubber particle sizes (<0.2). Those skilled in the art recognize that different sized groups of rubber particles may require some selection or modification of rubber particle measurement techniques for optimized accuracy. Average particle diameter and other rubber particle statistics and percentages can be measured by a number of means, including the Beckham Coulter: LS230 light scattering instrument and software. The use of this equipment for this application is discussed in the manufacturer's instructions and literature and in the JOURNAL OF APPLIED POLYMER SCIENCE, VOL. 77 (2000), page 1165, "A Novel Application of Using a Commercial Fraunhofer Diffractometer to Size Particles Dispersed in a Solid Matrix" by Jun Gao and Chi Wu. Preferably, with this equipment and software, the optical model used to calculate the rubber particle size and distribution statistics is as follows: (i) Fluid Refractive Index of 1.43, (ii) Sample Real Refractive Index of 1.57 and (iii) Sample Imaginary Refractive Index of 0.01.

Preferred monovinylidene aromatic polymers include HIPS resins containing about 6 to 8 weight percent of a polybutadiene rubber in the form of particles having an average particle diameter in the range of from about 1 to about 8 um with products of this type commercially available from The Dow Chemical Company under the tradenames of STYRON™ A-TECH™ 1200 and STYRON™ A-TECH™ 1175 brand HIPS resins.

The Component B ethylene polymer is selected from a fairly broad range of ethylene homo- or copolymers that can be blended with the monovinylidene aromatic polymer and, without use of a compatibilizer, provide blends that do not delaminate excessively and have improved combinations of physical properties, including the property combinations needed for use in the stretch blow molding process to provide good combinations of article properties including toughness, tensile, modulus, surface/haptics properties and opacity/whiteness properties. These ethylene polymers include ethylene homopolymers and copolymers of at least 50 weight percent ethylene with one or more other C-3 to C-25 alpha olefin comonomers including, for example, propylene, butene, hexene and octene and including copolymers of ethylene, optionally one or more of these C-3 to C-25 alpha olefin comonomers and one or more additional copolymerizable monomers polymerized therewith. Such additional copolymerizable monomers include, for example, olefin monomers having from 5 to 25 carbon atoms and ethylenically unsaturated carboxylic acids (both mono- and difunctional) as well as derivatives of these acids, such as esters and anhydrides. The suitable ethylene polymers comprise at least 50 percent by weight ethylene polymerized therein, more preferably at least 70 percent by weight, more preferably at least 80 percent by weight, more preferably at least 85 percent by weight, more preferably at least 90 weight percent and most preferably at least 95 percent by weight ethylene. Especially preferred ethylene polymers are homopolymers of ethylene and copolymers with less than 50 weight percent butene, hexene or octene, preferably 30 or less weight percent, more preferably 20 or less weight percent, more preferably 10 or less weight percent, and most preferably 5 or less weight percent. Especially preferred ethylene polymers are the known ethylene backbone homo- and co-polymers including high density polyethylenes; low density polyethylenes; linear low density polyethylenes and ethylene-based olefin block copolymers or "e-OBC's". Suitable methods for the preparation of all of these types of polymers are well known in the art. As known to those skilled in this area of technology, there are different methods for calculating or determining the comonomer content of ethylene copolymers that have different levels of accuracy. As used herein, unless otherwise specified, the ethylene copolymer comonomer contents are measured according to carbon 13 NMR. Other methods that can be used for general comonomer levels include the ASTM FTIR method based on IR (infrared) or mass balance method.

As is well known, high density polyethylene (HDPE) is generally produced by a low pressure, coordination catalyst ethylene polymerization process and consists mainly of long linear polyethylene chains. The density of this type of polymer is at least about 0.940 grams per cubic centimeter (g/cc) as determined by ASTM Test Method D 792 and less than or equal to about 0.98 g/cc, with a melt index of at least about 0.01 grams per 10 minutes (g/10 min) and less than or equal to 35 g/10 min. These and other ethylene polymer melt indexes referred to herein can generally be determined by ASTM Test Method D 1238, Condition 190°C/2.16 kg, (also referred to as I₂ ). HDPE resins preferred for use in the blends according to the present invention will have a density of at least about 0.950 grams per cubic centimeter (g/cc) and up to and including about 0.960 g/cc as determined by ASTM D 792, method B, on samples prepared according to ASTM D 1928 (annealed), Method C. ASTM D792 gives the same result as ISO 1183. Suitable HDPE residents will have a melt index of at least about 0.1 and more preferably at least about 1 g/10 min and less than or equal to about 25 grams per 10 minutes; more preferably less than or equal to about 10 g/10 min. Suitable HDPE's are commercially available as HDPE KT 10000 UE, HDPE KS 10100 UE and HDPE 35057E brand resins from The Dow Chemical Company.

Low density polyethylene (LDPE) is generally produced by a high pressure ethylene polymerization process using a free radical initiator, the molecules being mainly highly branched chains. LDPE usually has a density of from about 0.92 to less than about 0.94 grams per cubic centimeter and a melt index (I₂) of from 0.01 to 25 grams per 10 minutes.

Linear low density polyethylenes (LLDPE's), also preferred as Component B ethylene polymers, are copolymers of ethylene and up to about 40 weight percent of at least one additional alpha-olefin monomer having from 3 to 25 carbon atoms per molecule prepared using a coordination catalyst (Ziegler Natta or metallocene) and structurally having linear ethylene backbone chains with short chain branching (from the higher alpha olefin comonomer) and optionally smaller amounts of longer chain branching. Preferred LLDPE's are copolymers of ethylene with minor amounts of propylene, butene, hexane or octene, most preferably octene. The density of the LLDPE's is generally less than or equal to about 0.94 grams per cubic centimeter and preferably at least about 0.91 grams per cubic centimeter with a melt index in the range of from about 0.01 to about 15 grams per 10 minutes (I₂) preferably at least about 1 g/10 min and preferably less than or equal to 5 g/10 min (I₂). Preferred LLDPE's are commercially available from The Dow Chemical Company as DOWLEX™, AFFINITY™ and ELITE™ brand resins.

Olefin block copolymers (OBC's) may be produced by what is referred to as a chain shuttling polymerization process using a dual catalyst system that can provide ethylene block copolymer molecules that are mainly linear and have multiple, controlled statistical blocks. These blocks preferably comprise hard segments comprising ethylene and soft segments comprising ethylene and at least one other additional alpha-olefin monomer having from 3 to 25 carbon atoms per molecule. Preferred OBC comonomers include styrene, propylene, 1-butene, 1-hexene, 1-octene, 4-methyl-1-pentene, norbornene, 1-decene, 1,5-hexadiene, or a combination thereof. OBC's will generally have densities of at least about 0.85 grams per cubic centimeter and preferably less than or equal to about 0.94 g/cc and a melt index of at least about 0.1 grams per 10 minutes (I₂) and preferably less than or equal to about 100 gr/cc. Preferred OBC's for use in the blends according to this invention will have densities of at least about 0.860, preferably at least about 0.870 grams per cubic centimeter. Such olefin block copolymers are shown for example in WO2005/090427 and in US 2006/0199930. Preferred OBC's are copolymers of ethylene and octene and have comonomer contents in the range of 5 to 15 mol% octene.

It should also be noted that blends of the above types of ethylene polymer resins can suitably be employed as the ethylene polymer in the present invention.

For optimizing mechanical and aesthetics properties of the blends and articles made from those blends, the ethylene polymer needs to have a density of at least about 0.87, preferably at least about 0.885, more preferably at least about 0.90, more preferably at least about 0.920, and most preferably at least about 0.940 grams per cubic centimeter (g/cc). In preferred embodiments, the density is preferably less than or equal to about 0.98 g/cc, more preferably less than or equal to about 0.97 g/cc, more preferably less than or equal to about 0.965 g/cc and most preferably less than or equal to about 0.960 g/cc.

As known to those who practice in this area of technology, the accuracy of a density measurement of an ethylene polymer can be affected or improved by various sample preparation techniques as well as the measurement method that is used. Except where there is a different method specifically described, such as in the case of high density resins having a density greater than 0.940 grams per cubic centimeter, the resin densities and density ranges that are stated and claimed herein for the ethylene polymers are measured by the Archimedes displacement method, ASTM D 792-03, Method B, in isopropanol. Specimens were measured within 1 hour of molding after conditioning in the isopropanol bath at 23 °C for 8 min to achieve thermal equilibrium prior to measurement. The specimens were compression molded according to ASTM D-4703-00 Annex A with a 5 min initial heating period our about 190 °C and a 15 °C/min cooling rate per Procedure C. The specimen was cooled to 45 °C in the press with continued cooling until "cool to the touch". As mentioned above, in the case of high density polyethylene resins having densities greater than 0.940, the densities are determined by ASTM D 792, method B, on samples prepared according to ASTM D 1928 (annealed), Method C.

In order to balance and optimize the mechanical/aesthetics properties, the blends according to the present invention comprise from about 3 to less than about 15 percent by weight ethylene polymer based on (A) and (B). In preferred embodiments, the ethylene polymer content is preferably at least about 4, more preferably at least about 5, more preferably at least about 6 and most preferably at least about 6.5 percent by weight ethylene polymer based on (A) and (B). With regard to the upper limits of the range, the ethylene polymer is preferably less than or equal to 12 more preferably less than or equal to 11, more preferably less than or equal to 10 and most preferably less than or equal to 9 percent by weight ethylene polymer based on (A) and (B).

The balance of polymer content of the blend is then from at least about 85 to about 97 percent by weight monovinylidene aromatic polymer based on (A) and (B). In preferred embodiments, the monovinylidene aromatic polymer content is preferably at least about 88, more preferably at least about 89, more preferably at least about 90 and most preferably at least about 91 percent by weight monovinylidene aromatic polymer based on (A) and (B). With regard to the upper limits of the range, the monovinylidene aromatic polymer is preferably less than or equal to 96 more preferably less than or equal to 95, more preferably less than or equal to 94 and most preferably less than or equal to 93.5 percent by weight monovinylidene aromatic polymer based on (A) and (B).

By the use of the term "non-compatibilized" it is meant that, other than the rubber modified monovinylidene aromatic and ethylene polymer components A and B there is no added polymeric compatibilizing agent or compatibilizing additives. By the term "polymeric compatibilizing agent" is meant an additional polymer component separate from the rubber modified monovinylidene aromatic and ethylene polymer component(s) that compatibilizes the interface between the two polymer components, typically having units or blocks that are separately compatible with one of the polymer components. Examples of compatibilizing agents include olefin polymers graft polymerized with maleic anhydride or monovinylidene aromatic polymer, styrene/butadiene di- and tri-block copolymer rubbers and other graft copolymers.

Known plasticizers may be used if needed or if already included in the monovinylidene aromatic or ethylene polymer components. If used, representative plasticizers for the ethylene polymer component include calcium stearate and other standard plasticizers typically known and used in the industry such as fatty acid amides. If used, representative plasticizers for the monovinylidene aromatic polymer component include mineral oils and single component hydrocarbons such as cyclohexane and ethylbenzene. Representative plasticizers can also include nonfunctionalized, nonmineral oils including such vegetable oils as those derived from peanuts, cottonseed, olives, rapeseed, high-oleic sunflower, palm, and corn. These oils also typically include animal oils that are liquid under ambient conditions, such as some fish oils, sperm oil and fish-liver oils, and can include lard, beef tallow and butter. These nonfunctionalized, nonmineral oils can be used alone or in combination with one or more other mineral or nonmineral oils. For monovinylidene aromatic polymers of high Mw (particularly HIPS above about 250,000, or above about 300,000, or above about 350,000) plasticizers are preferably added, preferably to the monomers and/or rubber from which the monovinylidene aromatic polymer is made.

The amount of plasticizer used in the compositions of this invention can vary, but typically the amount of such blend in the composition is at least about 0.1, preferably at least about 0.5 and more preferably at least about 1, wt % based on the total weight of the polymer. The only limits on the maximum amount of plasticizer blend that can be used in the compositions of this invention are those set by cost and practical considerations, but typically the maximum amount of the blend in these compositions does not exceed about 10, preferably about 5 and more preferably about 3, wt % based on the total weight of the polymer. The plasticizer can be added before and/or after the formation of the monovinylidene polymers.

In addition to the monovinylidene aromatic polymer and ethylene polymer components and optional plasticizer, the blends of this invention can contain further additive components (other than compatibilizers) including the known colorants including dyes and pigments, fillers, nucleation agents (for the ethylene polymer), mold release agents, stabilizers and IR absorbers. These other components are known in the art, and they are used in the same manner and amounts as they are used in known monovinylidene aromatic polymers and blends. In a preferred embodiment these blends consist essentially of the monovinylidene aromatic polymer and ethylene polymer components and do not include any added fillers or polymer components.

The blends according to the present invention can be made by any of the various methods known in the art for blending or compounding additives or blend components into monovinylidene aromatic polymers, such as in various types of specialized blending or compounding equipment or in other unit operations with a melt mixing step, such as in the extruder screw of a molding machine. Typically the smaller ethylene polymer component is combined into the larger monovinylidene aromatic polymer component according to known techniques. For example, the ethylene polymer can be added to the monovinylidene aromatic polymer at the extrusion stage after polymer recovery in the plant, in a compounding extruder or blender, and/or at the injection or compression molding machine extruder in the melt extrusion section of the molding machine. The combination of the two can be done either with prior dry blending or by metering separate feeds of one or both into the melt mixing apparatus.

It has been found to be very desirable for obtaining the combination of blend compatibilization and controlled gloss surface according to the present invention to provide relatively high shear rates and high total shear strain or total shear deformation in the blending and/or mixing process used to produce the blends according to the present invention. As known to those skilled in this art, shear rate (in reciprocal seconds, s⁻¹) is the ratio of the shear velocities between two layers separated by a distance normal (perpendicular) to the flow direction that the polymer experiences at any given point in the process. The total shear strain (dimensionless) is determined by multiplying the shearing residence time by the shear rate. The methods for calculations of these values are well known to those skilled in the art and taught at pages 52 to 54 (shear rate) and page 79 (total shear) in the standard text, Rauwendaal, C., Understanding Extrusion, Hanser/ Gardner Publications, 1998.

It has been found that delaminating was reduced or eliminated and controlled gloss surfaces were provided in blends that have experienced shear rates of at least about 100 reciprocal seconds (s-1), preferably at least about 200, preferably at least about 250 more preferably at least about 300 and most preferably at least about 400 s-1. The amount of total shear provided should be at least about 100 (dimensionless), preferably at least about 200, and more preferably at least about 400. As used herein the term "total shear" includes shear experienced during the process steps of blend compounding, extrusion, and injection or compression molding a part or preform.

The blends of this invention can be used in the manufacture of various articles, including containers, packaging, components for consumer electronics and appliances. These blends are used in the same manner as known monovinylidene aromatic polymers and blends of monovinylidene aromatic polymers, e.g., extrusion, injection and compression molding, thermoforming. The blends according to the invention are, however, especially suited for stretch blow molding applications and, in one embodiment, the present invention is an improved stretch blow molding process. Examples of suitable known injection stretch blow molding processes (using injection molded preforms) are shown in WO 96/08356A; EP 870,593; JP 07-237,261A; and WO 2005/074428A. The use of compression molded preforms in suitable stretch blow molding processes are shown in WO 2005/077642A; WO 2006/040,631A; and WO 2006/040,627A.

The monovinylidene aromatic monomer blends according to the present invention are used in these processes generally according to their standard operation conditions as adjusted accordingly for use of the appropriate monovinylidene aromatic polymer processing temperatures and conditions. In these processes the preform is prepared by compression or injection molding, preferably by injection molding, and used in either a one or two step stretch blow molding process.

The improved SBM process according to the present invention uses the resins as described above in the form of injection or compression molded preforms to provide improved stretch blow molded articles. Preferred preform injection molding conditions for using the blends according to the present invention in a stretch blow molding process are injection pressures of from 6895 KPa to 193 MPa (1,000 to 28,000 pounds per square inch gauge (psig)); preferably at about 152 MPa (about 22,000 psig) and at temperatures in the range of from about 170 to about 280 °C ; preferably at about 240°C.

Preferred preform compression molding conditions for using the blends according to the present invention in a stretch blow molding process are compression force of from about 1,000 to about 10,000 Newtons (N), preferably at about 5000 N and at temperatures in the range of from about 130 to about 190 °C; preferably at about 170°C.

The SBM process can then be performed in the known SBM equipment and generally according to the known process conditions as adjusted somewhat for the monovinylidene aromatic polymer resins according to the present invention.

In a two step or reheat stretch blow molding process the preforms are produced in a discrete and separate first step, removed from the molding process, then cooled, optionally stored and then delivered to the subsequent stretch blow molding process. Then, for the stretch blow molding, the preform is preheated, stretched and blow molded in a separate stretch blow molding machine. The preform (either injection or compression molded) and SBM steps can take place in different locations and frequently the preform molder sells or delivers the preforms to a location where the container contents (such as dairy products) are produced, where the preforms are blow molded into bottles or containers and filled.

Alternatively, to make these processes more energy efficient, the stretch blow molding step on preforms can be done immediately or shortly after the preform molding step, maintaining the preform at the elevated temperature from the preform molding process, thus saving at least some of the heating that would otherwise be required. In such a single station stretch blow molding process, the molding of the preforms and the bottle blow molding step are both done on one machine, typically of a carousel type. The preforms are molded at one point by either injection or compression molding and then (still hot) stretched and blow molded in the bottle mold. They are typically used for smaller containers, such as wide mouth jam or jelly containers or personal care and household containers.

For either compression or injection molded types of preforms and with either a one or two stage process, the stretch blow molding process is similar and involves the same common series of steps:
- Preform heating - The body of the preforms are heated (optionally as kept hot as possible) to an appropriate heat-softened temperature that will yield sufficiently in the stretching and molding steps while the neck (or mouth or rim) is below that temperature to provide support to the preform during the stretching and blowing steps. The heating can be done by any known heating technique such as infrared heating. The heating may have been done partially or completely in the preform molding process for a one-stage process. Alternatively, for a two-stage process, the heating is done by conveying the preform through heaters of conventional type(s).
- Stretching the body of the preform - where the heat softened preform is physically stretched with a stretching means such as a plunger or plug, to approximate the length dimension of the final container. The stretching is typically done at a strain rate of from about 10 to about 450 millimeters per second (mm/s); preferably at about 200 mm/s and at temperatures in the range of from about 130 to about 190 °C; preferably at about 160°C. In the stretching step the matrix and rubber particles are subjected to axial elongational strain which contribute to the mechanical properties of the SBM products.
- blowing - where fluid pressure, such as air pressure, from inside the container and optionally vacuum from outside shape the preform to conform to the mold shape. The blowing step typically uses an air pressure of from about 3 to about 20 bar; preferably at about 8 to 12 bar. During the blowing step the matrix and rubber particles are subjected to strains in the hoop direction or perpendicular to the axial strain which also contributes to the mechanical properties of the SBM products. The mold temperature is from about 15 to about 45 °C, preferably at about 30 °C, during the blowing pressure and holding stages for cooling times that are typically in the range of from about 1.5 to about 14 seconds, preferably less than 5 seconds and more preferably about 2 seconds.
- cooling and ejection - where the shaped container cools, solidifies sufficiently for physical contact and handling, the movement of the polymer chains is frozen and the molded container is removed from the SBM apparatus.

The blend resins according to the invention are also suited for use in extruded sheet thermoforming processes which can also be viewed as a type of stretch blow molding process where the extruded sheet is the preform. Thermoforming processes are known in the art and can be done in several ways, as taught for example in "Technology of Thermoforming"; Throne, James; Hanser Publishers; 1996; pp.16-29. In a "positive" thermoforming process a gas or air pressure is applied to the softened sheet, the sheet is then stretched like a bubble and a male mold is brought into the "bubble". Then vacuum is applied to conform the part to the male mold surface. In this thermoforming process the required biaxial stretching/orientation is done primarily in one step when there is a gas or air pressure applied to the softened sheet. The sheet is thereby biaxially oriented when it is stretched like a bubble to nearly the final part size. The molding step is then completed with the vacuum and male mold to freeze the orientation into the sheet for a good balance of physical and appearance properties.

In a "negative" thermoforming process a vacuum or a physical plug is applied to the heat softened sheet and brings the sheet to nearly the final part size. Then, with positive air pressure or further external vacuum forming the sheet against an outer, female mold, the orientation is frozen into the polymer and the sheet is formed into the article. This negative thermoforming provides somewhat more axial orientation with somewhat less orientation in the hoop direction.

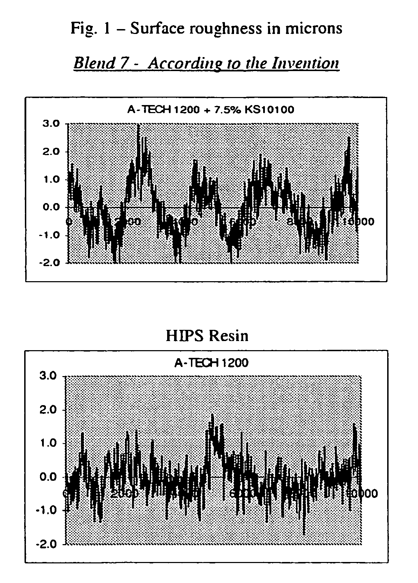

In further evaluations of the blends according to the invention in molded articles, it has been observed that they provide a desirable, more uniform and higher degree of surface roughness including at the preform stage and at the stretch blow molded article stage. This is observed visually in the form of surfaces with an aesthetically desirable "soft touch" feel and smooth, softer appearance in the nature of a matte finish. This is also shown in optical scanning analysis of samples as shown in Fig. 1 where there are uniformly distributed higher "peaks" and lower "valleys" that are measured in the material surface of blends according to the present invention than in a HIPS resin. This surface roughness effect provides beneficial anti-blocking and mold release properties as well as aiding greatly in reducing the friction in the automated physical handling of molded articles in conventional molding and packaging apparatus. For example, the surface roughness significantly improves the ability of the articles to slide across one another and across other surfaces and improves the processing rate for preforms passing through and along guides in the stretch blow molding machine feeding apparatus.

As used herein, the term controlled gloss in reference to the surface of molded articles prepared from the blends of the present invention refers to a relatively low gloss level. The desirable relatively low gloss level also corresponds to a relatively high and uniform level of surface roughness. This results in haptics or "touch" properties often referred to as a "soft touch" surface and/or in a so-called matte finish. Preferably, the controlled gloss blends according to the present invention when tested for gloss according to ASTM 523 at 60° on injection molded samples prepared according to ISO 2897-2 standard conditions, have a gloss of less than about 70 gloss units, preferably less than about 60 gloss units, more preferably less than about 55 gloss units and most preferably of less than about 50 gloss units.

The following examples are provided to illustrate various embodiments of the invention.

As shown by the data in Table 2 below, the indicated blends were made from a HIPS resin and several ethylene polymer resins. The HIPS resins were:
- STYRON™ A-TECH™ 1200 brand resin, commercially available from The Dow Chemical Company, containing about 8 weight percent of a polybutadiene rubber in the form of particles having an average particle size of 2.5um.
- STYRON™ A-TECH™ 1175 brand resin, commercially available from The Dow Chemical Company, containing 8 weight percent of a polybutadiene rubber in the form of particles having an average particle size of 5.5 um.

The ethylene polymer resins and their features and properties are summarized in the following tables including Table 1 listing several ethylene polymer resins used in the Experiment Blends and Table 2 further describing two developmental OBC's of ethylene with octene.

**Table 1 - Ethylene Polymer Components**

| Ethylene Polymer Resin | Comonomer content | Density (kg/dm3) | MI (2.16kg/ 190 °C) |
|---|---|---|---|
| KS 10100 UE HDPE* | <5 wt% | 0.955 | 4 |
| 35057E HDPE* | <5 wt% | 0.956 | 0.29 |
| Affinity™ PL1280G* | <30 wt% | 0.900 | 6 |
| OBC 1 | 12.83 mol% octene | 0.877 | 0.5 |
| OBC 2 | 10.41 mol% octene | 0.887 | 5 |

| | | | |
|---|---|---|---|
| *Commercially available from The Dow Chemical Company. | | | |

The OBC's in Table 2 were prepared according to the process as shown in US 2006/0199930 according to the method described in Examples 19A-I. For the OBC's in Table 2, branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

Samples are compression molded using ASTM D 1928. Flexural and 2 percent secant moduli are measured according to ASTM D-790. Storage modulus is measured according to ASTM D 5026-01 or equivalent technique. Melt index, or I₂, is measured in accordance with ASTM D 1238, Condition 190°C/2.16 kg. Melt index, or I₁₀ is also measured in accordance with ASTM D 1238, Condition 190°C/10 kg. Samples for density measurement are prepared according to ASTM D 1928. Measurements are made within one hour of sample pressing using ASTM D792, Method B.

The Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline. Calibration of the DSC is done as follows. First, a baseline is obtained by running a DSC from -90 °C without any sample in the aluminum DSC pan. Then 7 milligrams of a fresh indium sample is analyzed by heating the sample to 180°C, cooling the sample to 140°C at a cooling rate of 10°C /min followed by keeping the sample isothermally at 140°C for 1 minute, followed by heating the sample from 140°C to 180°C at a heating rate of 10°C per minute. The heat of fusion and the onset of melting of the indium sample are determined and checked to be within 0.5°C from 156.6°C for the onset of melting and within 0.5 J/g from 28.71 J/g for the of fusion. Then deionized water is analyzed by cooling a small drop of fresh sample in the DSC pan from 25°C to -30°C at a cooling rate of 10°C per-minute. The sample is kept isothermally at -30°C for 2 minutes and heat to 30°C at a heating rate of 10°C per minute. The onset of melting is determined and checked to be within 0.5°C from 0°C.

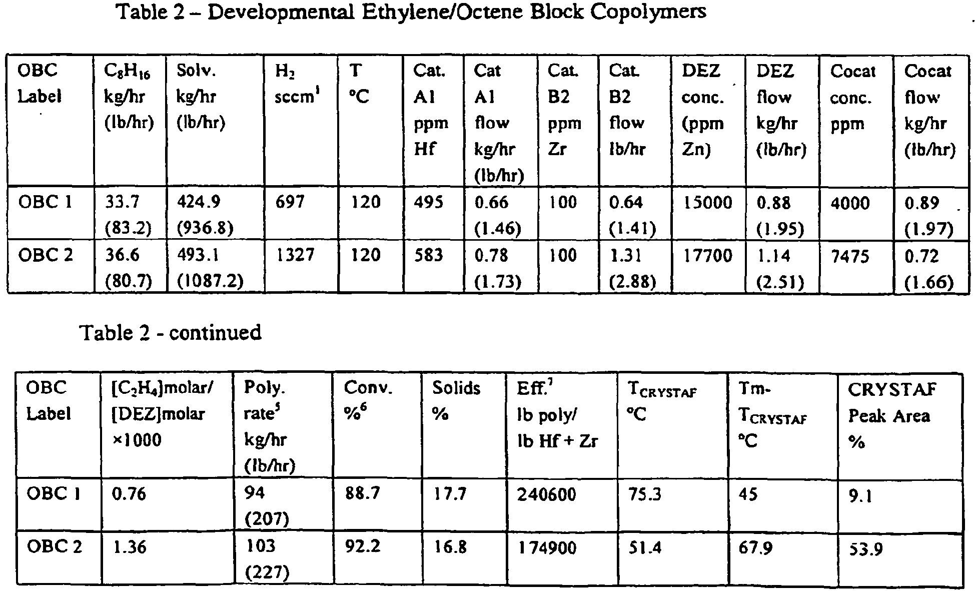

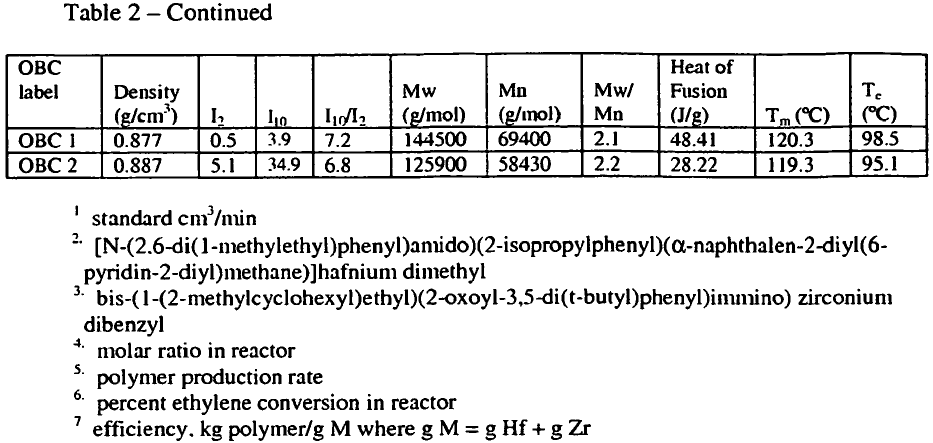

The blends in Table 3 below were prepared by dry blending the indicated resins and melt mixing in an injection molding machine to prepare samples under ISO 2897-2 standard conditions (melt temperature of 210°C, injection speed 35 mm/min) at a shear rate of 414 reciprocal seconds (s⁻¹) and a total shear strain of 828 to produce 4 millimeter (mm) thick tensile test bars and, for some samples, 3 mm plaques. For purposes of comparison the blends according to the invention are compared against Polimeri Koblend P477E a polystyrene/polyethylene alloy which is commercially available from Polimeri Europa and is promoted for refrigerators and automotive applications.

**Table 3 - Blend Summaries**

| Experimental Blend No | Monovinylidene Aromatic Polymer | | Ethylene Polymer Component B | |
|---|---|---|---|---|
| | A-TECH 1200 (%) | A-TECH 1175 (%) | Name | Amount (%) |
| 1 | 100 | | | 0 |
| 2 | | 100 | | 0 |
| 3 | | 95 | KS10100 - HDPE | 5 |
| 4 | 92.5 | | KS10100 - HDPE | 7.5 |
| 5 | | 90 | KS10100 - HDPE | 10 |
| 6 | | 85 | KS10100 - HDPE | 15 |
| 7 | 92.5 | | 35057 - HDPE | 7.5 |
| 8 | 92.5 | | PL1280G - LLDPE | 7.5 |
| 9 | 92.5 | | OBC 1 | 7.5 |
| 10 | 92.5 | | OBC 2 | 7.5 |
| 11 | Koblend P 477E | | N/A | |

The blend properties were measured according the following test methods:
Elastic Modulus ("E-Modulus") at strain rate of 1 mm/min - ISO 527
Notched Izod 23°C - ISO 180/1A
Tensile strength at yield ("TsY") at strain rate of 5mm/min - ISO 527
Tensile strength at rupture ("TsR") at strain rate of 5mm/min - ISO 527
Elongation at Rupture - ("E") at a strain rate of 5mm/min - ISO 527

Spectro-photometer testing of the opacity or whiteness was done on the surface of the tensile bars by reflectance measurements using the Shimadzu UV 3101-PC UV-vis-NIR spectrophotometer. Measurements were done at the center of the major surface area of the tensile bar and without recording background. It is noted that the spectrophotometer measurements of high reflectance values confirm the perceived opacity observations as to which resin blends have the desired level of whiteness.

Surface Roughness was measured using an Microprof optical scanner manufactured by FRT on two locations on the tensile bars: (1) centered on the large, rectangular surface area on the end of the bar farthest from the injection gate and (2) centered on the center, mid point of the bar, between the two large rectangular end sections. On each location three line scans of 10 mm length were done and the surface roughness was recorded by the optical scanner. Figures 1 and 2 represent the surface roughness for Blend 4, a sample according to the invention (Fig. 1) and for Blend 1, a HIPS resins (Fig. 2). Each figure shows the combination of the three surface roughness scans on the large, rectangular surface area on the end of the bar farthest from the injection gate. As can be seen in the figures, the compositions according to the invention provide a more uniform and greater surface roughness (higher peaks and lower valleys). Analysis of the scan data for the three tensile bars revealed that it is possible to distinguish surface roughness between different materials and correlate the data to the observed smooth, controlled gloss, matte finish of the material samples. Recorded in Table 4 is the measured average distance between the peaks and valleys that further reflects the higher degree of surface roughness obtained in the composition according to the invention. This also provides an anti-blocking effect that provide benefits for mold release and physical handling of the preforms in the stretch blow molding machine feeding apparatus along the guides. It is noted that desired uniform surface roughness as measured by this test, in the range of at least about 2, preferably at least about 2.5, preferably at least about 3 and more preferably at least about 3.5 provides sample surfaces with an aesthetically desirable feel and appearance in the nature of a matte finish.

The gloss values for these samples were tested according to ASTM 523 at 60° on available samples in the machine or principal flow direction. As indicated in the table, in some cases the gloss was measured on standard tensile bars (on the large, rectangular surface area on the end of the bar farthest from the injection gate), in some cases on injection molded 80x80x3 mm plaques and in some cases on a section of extruded sheet. For the tensile bars and plaques, these were prepared according to ISO 2897-2 standard conditions. It was visually observed that a similar degree of controlled gloss surface was obtained on the samples according to the invention in spite of different sample molding processes and geometries and including the finished, molded container articles.

**Table 4 - Blend Evaluations**

| Experimental Blend No | E-Modulus | Notched Izod 23 °C | TsY 5mm/min | TsR 5mm/min | E 5mm/min | Spectrophotometer | Surface Roughness | Surface Gloss | Comments regarding Ethylene Polymer |
|---|---|---|---|---|---|---|---|---|---|
| | MPa | kJ/m² | MPa | MPa | % | %R | Micron | Gloss units | |
| 1* | 1775 | 12 | 18.72 | 21.06 | 67.6 | 73 | 1.7 | 55.1¹ | None |
| 2* | 1646 | | 13.64 | 16.39 | 48.46 | - | - | 7.4³ | None |
| 3* | 1541 | - | 14.43 | 15.7 | 33.73 | - | - | 8.2³ | 5 HDPE |
| 4 | 1665 | 7.1 | 19.28 | 17.78 | 41.7 | 83 | 4.1 | 54.7¹ | 7.5 HDPE |
| 5 | 1483 | - | 16.32 | 16.38 | 21.56 | - | - | 8_{.}5³ | 10 HDPE |
| 6* | Sample delamination prevented meaningful measurements | | | | | | | | Too much |
| 7 | 1669 | 9.9 | 19.31 | 19.48 | 57.1 | 79 | - | 44.4¹ | 7.5 HDPE |
| 8 | 1607 | 9.5 | 18.5 | 17.86 | 53.4 | 86 | - | 7.5 | 7.5 LLDPE |
| 9 | 1490 | 6.9 | 17.18 | 10.5 | 13.6 | 86 | - | 56.6¹ 65.6² | |
| | | | | | | | | | 7.5 OBC |
| 10 | 1544 | 6.9 | 17.73 | 12.38 | 23.2 | 87 | - | 57.5¹ 64² | |
| | | | | | | | | | 7.5 OBC |
| 11* | 1210 | 32.7 | 18.4 | 18.4 | 93 | 86 | - | 73.8¹ | Commercial PS/PE Blend |

| | | | | | | | | | |
|---|---|---|---|---|---|---|---|---|---|
| *Comparative - not an example of the present invention ¹ Gloss measured on tensile bars ² Gloss measured on plaques ³ Gloss measured on extruded sheet | | | | | | | | | |

As can be seen in Table 4 above, in Experiments 1 and 2, containing no ethylene polymer, insufficient levels of opacity and surface roughness were provided by the HIPS resins. In Experiments 3, 4 and 5 where 5, 7.5 and 10 weight percentages, respectively, of high density polyethylene were added, the samples were visually observed to be white-colored and exhibited very desirable combinations of physical properties, toughness, opacity and surface roughness. In Experiment 6 containing 15 weight percent ethylene polymer, the sample delaminated too significantly. In Experiments 7 through 11 it can be seen that a variety of ethylene polymer components including LLDPE and OBC's, in blends with HIPS resins, provide desirable combinations of toughness and opacity.

Injection stretch blow molded bottles have been successfully made in a commercial ISBM two stage-line (shear rate of about 231 reciprocal seconds (s⁻¹) and a total shear of about 369) when using Blend 4 from Table 3 above according to this invention. When using a pure HIPS resin the ISBM process is not operational due to poor preform heating and preform jamming in the preform feeding apparatus.

In further testing of compositions according to the present invention, sheets were extruded (shear rate of about 128 reciprocal seconds (s⁻¹) and a total shear of about 4525) from blends of STYRON A-TECH 1175 brand HIPS resin with 5 and 10wt% HDPE KS 10100 UE ethylene polymer. Comparative sheets were also prepared from the same HIPS resin containing 2wt% TiO2, which is a standard TiO2 level for producing white-colored HIPS resins for this application. These extruded sheets were thermoformed into sample refrigerator liners. Good whiteness levels were observed in both the blend resins as was a uniform thickness distribution profile without delamination. The visible spectra for the samples were determined using visual examination and the spectrophotometer measurement as discussed above. Visually the blend compositions according the present invention provided sufficient whiteness and were about equivalent to a formulation typically used in this application, a HIPS resin containing 2wt% TiO2 white pigment. The spectrophotometer measurements showed the blend compositions according the present invention to provide sufficient reflectance/whiteness values although somewhat lower reflectance values than TiO2 white pigmented HIPS. Table 5 below shows the results.

**Table 5**

| Experimental Blend No | Composition | Spectrophotometer %R | Surface Gloss (Gloss units) |
|---|---|---|---|
| 12* | HIPS + 2wt% TiO2 | 91% | <15 |
| 3 | HIPS + 5wt% HDPE | 84% | 8.2 |
| 5 | HIPS + 10wt% HDPE | 87% | 8.5 |

| | | | |
|---|---|---|---|
| *Comparative - not an example of the present invention | | | |

Although the invention has been described in considerable detail, this detail is for the purpose of illustration and is not to be construed as a limitation on the scope of the invention as described in the pending claims. When a numerical range is given, values include the end points of the range. All U.S. patents and published patent applications identified above are incorporated herein by reference.

## Claims

1. A non-compatibilized blend consisting essentially of:
(A) 90 to 94 wt.% of a rubber-modified monovinylidene aromatic polymer;
(B) 6 to 10 wt.% of an ethylene polymer having a density of 0.87 to 0.98 g/cm³, as measured by ASTM D 792-03, Method B; and
(C) optionally a non-polymeric additive and/or a non-polymeric stabilizer; wherein the amounts of polymers (A) and (B) are based on the total weight of these two polymers.

2. A blend according to Claim 1, wherein the ethylene polymer is selected from high density polyethylene, linear low density polyethylene, low density polyethylene and olefin block copolymers.

3. A blend according to Claim 1, wherein the ethylene polymer has a density of at least 0.940 g/cm³.

4. A blend according to Claim 1, wherein the monovinylidene aromatic polymer is obtainable by polymerization in the presence of at least one rubber.

5. A blend according to Claim 4, wherein the rubber is a 1,3-butadiene homopolymer, a copolymer of 1,3-butadiene and one or more copolymerizable monomers, or a mixture thereof.

6. A blend according to Claim 1, wherein the content of the rubber is 1-40 wt.% based on the weight of the rubber-modified monovinylidene aromatic polymer, and the rubber is in the form of particles having a volume average diameter of 1-8 µm.

7. An article obtainable by moulding a blend according to Claim 1, the article having a surface gloss of less than 60.

8. A process for producing an article comprising stretch blow moulding a blend according to Claim 1.

9. A stretch blow moulded article obtainable by a process according to Claim 8.

10. A process for preparing a blend as defined in Claim 1 comprising the step of melt mixing the ethylene polymer and the monovinylidene aromatic polymer at a shear rate of at least 200 s⁻¹.

11. A process according to Claim 10, wherein the melt mixing of the ethylene polymer and the monovinylidene aromatic polymer is performed at a total shear strain of at least 400 s⁻¹.

12. A process for preparing a blend as defined in Claim 1 comprising the step of blending the ethylene polymer and the monovinylidene aromatic polymer in the melt extrusion section of a moulding machine.

## Patentansprüche

1. Nichtkompatibilisierte Mischung, die im Wesentlichen besteht aus:
(A) 90 bis 94 Gew.% eines Kautschuk-modifizierten, aromatischen Monovinylidenpolymers;
(B) 6 bis 10 Gew.% eines Ethylenpolymers mit einer Dichte von 0,87 bis 0,98 g/cm³, wie durch ASTM D 792-03, Methode B gemessen; und
(C) optional ein nicht polymeres Additiv und/oder einen nicht polymeren Stabilisator;
worin die Mengen der Polymere (A) und (B) auf dem Gesamtgewicht dieser beiden Polymere basieren.

2. Mischung gemäß Anspruch 1, worin das Ethylenpolymer aus Polyethylen hoher Dichte, linearem Polyethylen niederer Dichte, Polyethylen niederer Dichte und Olefin-Blockcopolymeren ausgewählt ist.

3. Mischung gemäß Anspruch 1, worin das Ethylenpolymer eine Dichte von mindestens 0,940 g/cm³ hat.

4. Mischung gemäß Anspruch 1, worin das aromatische Monovinylidenpolymer durch Polymerisierung in Gegenwart mindestens eines Kautschuks erhältlich ist.

5. Mischung gemäß Anspruch 4, worin der Kautschuk ein 1,3-Butadienhomopolymer, ein Copolymer aus 1,3-Butadien und einem oder mehrerer copolymerisierbarer Monomere oder eine Mischung daraus ist.

6. Mischung gemäß Anspruch 1, worin der Gehalt an Kautschuk 1 bis 40 Gew.% auf Basis des Gewichts des Kautschuk-modifizierten, aromatischen Monovinylidenpolymers ist, und der Kautschuk in Form von Teilchen mit einem volumengemittelten Durchmesser von 1 bis 8 µm vorliegt.

7. Erzeugnis, das durch Formen einer Mischung gemäß Anspruch 1 erhältlich ist, worin das Erzeugnis einen Oberflächenglanz von weniger als 60 hat.

8. Verfahren zur Herstellung eines Erzeugnisses, das das Streckblasformen einer Mischung gemäß Anspruch 1 umfasst.

9. Streckglasgeformtes Erzeugnis, erhältlich durch ein Verfahren gemäß Anspruch 8.

10. Verfahren zur Herstellung einer Mischung gemäß Anspruch 1, das den Schritt des Schmelzmischens des Ethylenpolymers und des aromatischen Monovinylidenpolymers bei einer Scherungs-Rate von mindestens 200 s⁻¹ umfasst.

11. Verfahren gemäß Anspruch 10, worin das Schmelzmischen des Ethylenpolymers und des aromatischen Monovinylidenpolymers bei einer gesamten Scherungs-Dehnung von mindestens 400 s⁻¹ durchgeführt wird.

12. Verfahren zur Herstellung einer Mischung wie in Anspruch 1 definiert, das den Schritt des Mischens des Ethylenpolymers und des aromatischen Monovinylidenpolymers im Schmelzextrusionsabschnitt einer Formungsmaschine umfasst.

## Revendications

1. Mélange non compatibilisé constitué essentiellement de :
(A) 90 à 94 % en masse d'un polymère de composé monovinylidène aromatique modifié par du caoutchouc;
(B) 6 à 10 % en masse d'un polymère d'éthylène ayant une densité, mesurée selon la norme ASTM D 792-03, méthode B, de 0,87 à 0,98 g/cm³; et
(C) éventuellement un additif non polymère et/ou un stabilisant non polymère;
les quantités des polymères (A) et (B) étant rapportées à la masse totale de ces deux polymères.

2. Mélange selon la revendication 1, dans lequel le polymère d'éthylène est choisi parmi du polyéthylène haute densité, du polyéthylène basse densité linéaire, du polyéthylène basse densité et des composés à blocs d'oléfines.

3. Mélange selon la revendication 1, dans lequel le polymère d'éthylène a une densité d'au moins 0,940 g/cm³.

4. Mélange selon la revendication 1, dans lequel le polymère de composé monovinylidène aromatique peut être obtenu par polymérisation en présence d'au moins un caoutchouc.

5. Mélange selon la revendication 4, dans lequel le caoutchouc est un homopolymère de 1,3-butadiène, un copolymère de 1,3-butadiène et d'un ou plusieurs monomères copolymérisables, ou d'un de leurs mélanges.

6. Mélange selon la revendication 1, dans lequel la teneur en caoutchouc est de 1-40 % en masse par rapport à la masse du polymère de composé monovinylidène aromatique modifié par un caoutchouc, et le caoutchouc est sous forme de particules ayant un diamètre moyen en volume de 1-8 µm.

7. Article pouvant être obtenu par moulage d'un mélange selon la revendication 1, l'article ayant un brillant de surface inférieur à 60.

8. Procédé de production d'un article comprenant le moulage par étirage-soufflage d'un mélange selon la revendication 1.

9. Article moulé par étirage-soufflage pouvant être obtenu par un procédé selon la revendication 8.

10. Procédé de préparation d'un mélange tel que défini dans la revendication 1, comprenant l'étape de mélange à l'état fondu du polymère d'éthylène et du polymère de composé monovinylidène aromatique à une vitesse de cisaillement d'au moins 200 s⁻¹.

11. Procédé selon la revendication 10, dans lequel le mélange à l'état fondu du polymère d'éthylène et du polymère de composé monovinylidène aromatique s'effectue à une contrainte de cisaillement totale d'au moins 400 s⁻¹.

12. Procédé de préparation d'un mélange tel que défini dans la revendication 1, comprenant l'étape de mélange du polymère d'éthylène et du polymère de composé monovinylidène aromatique dans la section d'extrusion à chaud d'une machine de moulage.
